(19) Europäisches Patentamt
European Patent Office
Office européen des brevets

(11) EP 4 786 506 A1

(12) EUROPEAN PATENT APPLICATION

(43) Date of publication:
05.08.2026 Bulletin 2026/32

(21) Application number: 25155320.2

(22) Date of filing: 31.01.2025

(51) International Patent Classification (IPC):
***C08F 210/16*** *(2006.01)* *C08F 4/659* *(2006.01)*
*C08L 23/0807* *(2025.01)* *F16L 9/12* *(2006.01)*

(52) Cooperative Patent Classification (CPC):
(C-Sets available)
**C08F 210/16; C08L 23/0815;** C08F 4/65912;
C08F 4/65916; C08F 2420/07; F16L 9/12 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventor: **DOU, Qizheng**
**4021 Borealis Polyolefine GmbH, St.-Peter-Strasse 25, Linz (AT)**

(74) Representative: **HGF**
**HGF Limited**
**4th Floor, 1 City Square**
**Leeds LS1 2ES (GB)**

(54) **POLYETHYLENE COMPOSITIONS**

(57) This disclosure relates to a polyethylene composition comprising a metallocene-catalysed multimodal polyethylene wherein the metallocene-catalysed multimodal polyethylene comprises:
(i) from 40 to 52 wt%, based on the total weight of the metallocene-catalysed multimodal polyethylene, of a first polyethylene component (A), optionally wherein the first polyethylene component (A) is a polyethylene homopolymer, and
(ii) from 48 to 60 wt%, based on the total weight of the metallocene-catalysed multimodal polyethylene, of a second polyethylene component (B), optionally wherein the second polyethylene component (B) is a polyethylene copolymer,
wherein the first polyethylene component (A) has a density (ISO 1183-1:2019 method A) in the range of from 945 to 970 kg/m$^3$, and a $MFR_2$ (190°C, 2.16 kg, ISO 1133) in the range of from 0.2 to 10 g/10 min; the second polyethylene component (B) has a density (ISO 1183-1:2019 method A) in the range of from 900 to 930 kg/m$^3$, and wherein the polyethylene composition has a density (ISO 1183-1:2019 method A) of 935 to 960 kg/m$^3$; and a $MFR_5$ (190°C, 5.0 kg, ISO 1133) in the range from 0.5 to 3.0 g/10min. This disclosure further relates to use of the polyethylene composition, a process for preparing the polyethylene composition, and a pipe or pipe fitting comprising the polyethylene composition.

EP 4 786 506 A1

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815;**
C08F 210/16, C08F 210/14, C08F 2500/12,
C08F 2500/27

## Description

The present invention relates to a polyethylene composition suitable for the production of a pipe. The present invention also relates to a pipe or pipe fitting comprising the polyethylene composition, a process for producing the polyethylene composition, and the use of the polyethylene composition for the production of a pipe or pipe fitting.

## Background

Polyolefin pipes and especially polyethylene pipes are used for the transport of water and gas, as well as industrial liquids and slurries. Due to their versatility, ease of production and installation, and non-corrosivity, their use is constantly increasing.

New installation techniques, such as trenchless and sand bed-free installation, demand polyethylene pipe resins with higher and higher resistance to slow crack growth. The requirements for slow crack growth are becoming increasingly stringent and many of the existing products fail to consistently meet those requirements. At the same time, there is a need to improve the impact resistance of the HOPE pipe resins in order to avoid pipelines' failure by rapid crack propagation.

According to ISO 9080, polyethylene pipes are classified by their minimum required strength, i.e. their capability to withstand different hoop stresses for 50 years at 20 °C without fracturing. According to this standard, pipes withstanding hoop stresses of 8.0 MPa (MRSs.o) are classified as PE80 pipes, and pipes withstanding hoop stresses of 10.0 MPa (MRS-io.o) are classified as PE100 pipes. The service temperature for a typical prior art PE100 pipes is usually within the temperature range from about 0 °C to about 50 °C. There is however a need to provide pipes which are can withstand high hoop stresses at high temperatures for applications where pipes have a higher service temperature.

To meet the PE80 requirements with multimodal resins manufactured by conventional Ziegler-Natta catalysts, the density is typically at least 940 kg/m3 and, to meet PE100 requirements, the density is typically above 945 kg/m3 . However, the density of a polyethylene resin is related to its crystallinity. The higher the crystallinity of a polyethylene resin the lower its slow crack growth resistance. When the density is increased, the resistance to slow crack growth (SCG) decreases. The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415).

US2013323450A1 discloses a method of preparing a medium-density polyethylene pipe comprising melting a multimodal metallocene-catalyzed polyethylene resin to form a molten polyethylene, wherein the multimodal metallocene-catalyzed polyethylene resin has a density of from about 0.925 g/ml to about 0.942 g/ml, a magnitude of slip-stick greater than about 300 psi, a stress for smooth to matte transition of greater than about 90 kPa of stress, and a shear rate for smooth to matte transition greater than about 10 s-1, wherein the magnitude of slip-stick, stress for smooth to matte transition, and shear rate for smooth to matte transition are determined by a capillary rheology test; and forming the molten polyethylene resin into pipe. A pipe prepared from a multimodal metallocene-catalyzed polyethylene resin having a density of from about 0.925 g/ml to about 0.942 g/ml, a magnitude of slip-stick greater than about 300 psi; a stress for smooth to matte transition of greater than about 90 kPa, and a shear rate for smooth to matte transition greater than about 10 s-1, wherein the magnitude of slip-stick, stress for smooth to matte transition, and shear rate for smooth to matte transition are determined by a capillary rheology test.

US20060036041A1 discloses various compositions, including but not limited to a high strength bimodal polyethylene composition having a density of 0.940 g/cc or more, the composition comprising a high molecular weight polyethylene component having a higher weight average molecular weight (HwHMW) and a low molecular weight polyethylene component having a lower weight average molecular weight (HwLMW), wherein: the ratio of the higher weight average molecular weight to the lower weight average molecular weight (MwHMW:MwLMW) is 30 or more; and the composition qualifies as a PE 100 material such that in accordance with ISO 1167 a pipe formed from the composition that is subjected to internal pipe resistance has an extrapolated stress of 10 MPa or more when the internal pipe resistance curve is extrapolated to 50 or 100 years in accordance with ISO 9080:2003(E).

There remains a need to provide polyethylene compositions which can be used in pipes and pipe fittings which have good tensile strength at high temperatures, for example for use in contexts where hot fluids are transported. There remains a need to provide polyethylene compositions with good tensile strength at ambient temperatures. Further, there remains a need to provide polyethylene compositions which can be used in pipes and pipe fittings which show good resistance to slow crack growth. Additionally, there remains a need to provide polyethylene compositions with a desirable balance of mechanical properties including, for example, a desirable balance between tensile strength at high temperature and resistance to slow crack growth.

## Definitions

Where the term "comprising" is used in the present description and claims, it does not exclude other non-specified elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene-catalysed polyethylene (mPE) is defined in this invention as polyethylene which has been produced in the presence of a metallocene catalyst.

For the purpose of the present invention "polyethylene (PE) which comprises a first polyethylene component (A) and a second polyethylene component (B)" means that the PE is produced in an at least 2-stage sequential polymerization process, wherein first component (A) is produced and component (B) is then produced in the presence of component (A) in a subsequent polymerization step, yielding the PE or vice versa, i.e. first component (B) is produced and component (A) is then produced in the presence of component (B) in a subsequent polymerization step, yielding the PE.

PEs produced in a multistage process are also designated as "in-situ" or "reactor" blends. The resulting end-product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

Term "multimodal" in context of polyethylene (PE) means herein multimodality with respect to melt flow rate (MFR) of the at least two polyethylene components, i.e. the two polyethylene components, have different MFR values. The multimodal medium density polyethylene can have in addition or alternatively multimodality between the two polyethylene components with respect to one or more further properties, like molecular weight, density, comonomer type and/or comonomer content, as will be described later below.

The term "polyethylene homopolymer" may refer to a polyethylene homopolymer that comprises at least 99.0 wt%, especially at least 99.5 wt% ethylene monomer units. Thus, a polyethylene homopolymer may comprise up to 1.0 wt% comonomer units, but preferably comprises only up to 0.5 wt%, like up to 0.2 wt% or even up to 0.1 wt% only. In an embodiment of the present invention, the amount of comonomer in the polyethylene homopolymer component is not detectable with $^{13}C$-NMR.

## Description

According to a first aspect of the present disclosure, there is provided a polyethylene composition comprising a metallocene-catalysed multimodal polyethylene wherein the metallocene-catalysed multimodal polyethylene comprises:

(i) from 40 to 52 wt%, based on the total weight of the metallocene-catalysed multimodal polyethylene, of a first polyethylene component (A), optionally wherein the first polyethylene component (A) is a polyethylene homopolymer, and

(ii) from 48 to 60 wt%, based on the total weight of the metallocene-catalysed multimodal polyethylene, of a second polyethylene component (B), optionally wherein the second polyethylene component (B) is a polyethylene copolymer,

wherein the first polyethylene component (A) has a density (ISO 1183-1:2019 method A) in the range of from 945 to 970 kg/m$^3$, and a $MFR_2$ (190°C, 2.16 kg, ISO 1133) in the range of from 0.2 to 10 g/10 min;

the second polyethylene component (B) has a density (ISO 1183-1:2019 method A) in the range of from 900 to 930 kg/m$^3$, and

wherein the polyethylene composition has a density (ISO 1183-1:2019 method A) of 935 to 960 kg/m$^3$; and a $MFR_5$ (190°C, 5.0 kg, ISO 1133) in the range from 0.5 to 3.0 g/10min.

The inventors have found that surprisingly the polyethylene composition of the disclosure may be used to produce pipes having improved pressure resistance, for example, short term pressure resistance. Pipes produced using polyethylene compositions according to the disclosure may have long lifetimes at high temperatures, even when the pipes are exposed to high stresses. Pipes produced according to the present disclosure are especially suitable for high temperature applications, e.g. carrying hot water. It has also been found that, by using a metallocene-catalysed multimodal polyethylene defined above it is possible to provide a polyethylene composition having an improved tensile strength. Polyethylene compositions of the disclosure have an advantageous balance of properties that make them especially suitable for the production of pipes. This balance of properties includes high strength and pressure resistance. Polyethylene compositions of the disclosure show good pressure resistance properties even at temperatures above those tested in the prior art. The inventors believe that the low loop MFR, i.e. the low $MFR_2$ of the first polyethylene component (A), when used in conjunction with the other requirements of the polyethylene composition, leads to the improved properties for high temperatures uses. The loop MFR is much lower than is typical in the prior art.

Yield stress may be measured to provide an indication of the composition's tensile strength.

Additionally or alternatively, the polyethylene composition may have a yield stress at 0.3 mm/min of 4.0 MPa or higher, 4.5 MPa or higher, 5.0 MPa or higher, 5.5 MPa or higher, 6.0 MPa or higher, or 6.5 MPa or higher. The yield stress at 0.3 mm/min may be at most 9.0 MPa, at most 8.5 MPa, at most 8.0 MPa, at most 7.5 MPa or at most 7.0 MPa. For example, the yield stress at 0.3 mm/min may be from 4.0 to 9.0 MPa, from 4.5 to 8.5 MPa, from 5.0 to 8.0 MPa, from 5.5 to 7.5 MPa, from 6.0 to 7.0 MPa or from 6.5 to 7.0 MPa. Optionally the polyethylene composition may have a yield stress at 0.3 mm/min is from 4.0 MPa to 9.0 MPa, from 4.5 MPa to 9.0 MPa, from 5.0 MPa to 9.0 MPa, from 5.5 MPa to 9.0 MPa, from 6.0 MPa to 9.0 MPa, or from 6.5 MPa to 9.0 MPa. Optionally the polyethylene composition may have a yield stress at 0.3 mm/min is from 4.0 MPa to 8.0 MPa, from 4.5 MPa to 8.0 MPa, from 5.0 MPa to 8.0 MPa, from 5.5 MPa to 8.0 MPa, from 6.0 MPa to 8.0 MPa, or from 6.5 MPa to 8.0 MPa.

Additionally or alternatively, the polyethylene composition may have a yield stress at 0.09 mm/min of 4.0 MPa or higher, 4.5 MPa or higher, 5.0 MPa or higher, 5.5 MPa or higher, 6.0 MPa or higher, or 6.5 MPa or higher. The yield stress at 0.09 mm/min may be at most 9.0 MPa, at most 8.5 MPa, at most 8.0 MPa, at most 7.5 MPa or at most 7.0 MPa. For example, the yield stress at 0.09 mm/min may be from 4.0 to 9.0 MPa, from 4.5 to 8.5 MPa, from 5.0 to 8.0 MPa, from 5.5 to 7.5 MPa, from 6.0 to 7.0 MPa or from 6.5 to 7.0 MPa. Optionally the polyethylene composition may have a yield stress at 0.09 mm/min of from 4.0 MPa to 9.0 MPa, from 4.5 MPa to 9.0 MPa, from 5.0 MPa to 9.0 MPa, from 5.5 MPa to 9.0 MPa, from 6.0 MPa to 9.0 MPa, or from 6.5 MPa to 9.0 MPa. Optionally the polyethylene composition may have a yield stress at 0.09 mm/min of from 4.0 MPa to 8.0 MPa, from 4.5 MPa to 8.0 MPa, from 5.0 MPa to 8.0 MPa, from 5.5 MPa to 8.0 MPa, from 6.0 MPa to 8.0 MPa, or from 6.5 MPa to 8.0 MPa.

Additionally or alternatively, the polyethylene composition may have a yield stress at 0.03 mm/min of 4.0 MPa or higher, 4.5 MPa or higher, 5.0 MPa or higher, 5.5 MPa or higher, 6.0 MPa or higher, or 6.5 MPa or higher. The yield stress at 0.03 mm/min may be at most 9.0 MPa, at most 8.5 MPa, at most 8.0 MPa, at most 7.5 MPa or at most 7.0 MPa. For example, the yield stress at 0.03 mm/min may be from 4.0 to 9.0 MPa, from 4.5 to 8.5 MPa, from 5.0 to 8.0 MPa, from 5.5 to 7.5 MPa, from 6.0 to 7.0 MPa or from 6.5 to 7.0 MPa. Optionally the polyethylene composition may have a yield stress at 0.03 mm/min of from 4.0 MPa to 9.0 MPa, from 4.5 MPa to 9.0 MPa, from 5.0 MPa to 9.0 MPa, from 5.5 MPa to 9.0 MPa, from 6.0 MPa to 9.0 MPa, or from 6.5 MPa to 9.0 MPa. Optionally the polyethylene composition may have a yield stress at 0.03 mm/min of from 4.0 MPa to 8.0 MPa, from 4.5 MPa to 8.0 MPa, from 5.0 MPa to 8.0 MPa, from 5.5 MPa to 8.0 MPa, from 6.0 MPa to 8.0 MPa, or from 6.5 MPa to 8.0 MPa.

Yield stress may be determined according to the tensile test according to ISO 527-1.

The pressure resistance may be determined by measuring the short term pressure resistance of a pipe formed using the polyethylene composition of the present disclosure. The short term pressure resistance of a pipe provides an indication of the pipe's resistance to internal hydrostatic pressure at a given temperature. Short term pressure resistance may be measured according to ISO-1167-1. A hoop stress of 5.4-5.8 MPa and a temperature of 80 °C, or a hoop stress of 4.1 MPa and a temperature of 95 °C may be applied.

Pipes produced using the polyethylene composition of the present disclosure may have a short term pressure resistance of greater than 100 hours under a longitudinal tensile stress of 5.8 MPa at a temperature of 80 °C. Pipes produced using the polyethylene composition of the present disclosure may have a short term pressure resistance of greater than 10000 hours under a longitudinal tensile stress of 5.4 MPa at a temperature of 80 °C. Pipes produced using the polyethylene composition of the present disclosure may have a short term pressure resistance of greater than 10000 hours under a longitudinal tensile stress of 4.1 MPa at a temperature of 95 °C. Pipes produced using the polyethylene composition of the present disclosure may have a short term pressure resistance of greater than 100 hours under a longitudinal tensile stress of 5.8 MPa at a temperature of 80 °C and greater than 10000 hours under a longitudinal tensile stress of 5.4 MPa at a temperature of 80 °C. Pipes produced using the polyethylene composition of the present disclosure may have a short term pressure resistance of greater than 100 hours under a longitudinal tensile stress of 5.8 MPa at a temperature of 80 °C and greater than 10000 hours under a longitudinal tensile stress of 4.1 MPa at a temperature of 95 °C. Pipes produced using the polyethylene composition of the present disclosure may have a short term pressure resistance of greater than 100 hours under a longitudinal tensile stress of 5.8 MPa at a temperature of 80 °C and greater than 10000 hours under a longitudinal tensile stress of 4.1 MPa at a temperature of 95 °C. Pipes produced using the polyethylene composition of the present disclosure may have a short term pressure resistance of greater than 100 hours under a longitudinal tensile stress of 5.8 MPa at a temperature of 80 °C, greater than 10000 hours under a longitudinal tensile stress of 5.4 MPa at a temperature of 80 °C and greater than 10000 hours under a longitudinal tensile stress of 4.1 MPa at a temperature of 95 °C.

The polyethylene composition of the present invention is suitable for use in the manufacture of pipes and pipe fittings. According to a second aspect, the present disclosure also provides a pipe or pipe fitting comprising the

polyethylene composition of the first aspect. As a third aspect, the present disclosure also provides the use of the polyethylene composition of the first aspect for producing a pipe or pipe fitting.

A fourth aspect of the present disclosure provides a process for producing the polyethylene composition of the first aspect, wherein the metallocene-catalysed multimodal polyethylene (mPE) is produced in the presence of metallocene complex of formula (I):

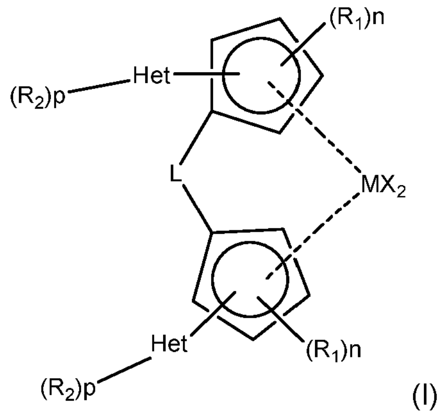

(I)

wherein each X is independently selected from a halogen atom, a $C_{1-6}$-alkyl group, a $C_{1-6}$-alkoxy group, a phenyl and a benzyl group;

each Het is independently a monocyclic heteroaromatic group containing at least one heteroatom selected from O and S;

L is $-R'_2Si-$, wherein each R' is independently selected from $C_{1-20}$-hydrocarbyl substituted with alkoxy having 1 to 10 carbon atoms and $C_{1-10}$-alkyl substituted with alkoxy having 1 to 10 carbon atoms;

M is selected from Ti, Zr and Hf;

each $R_1$ is independently selected from a $C_{1-6}$-alkyl group and $C_{1-6}$-alkoxy group;

each n is 1 or 2;

each $R_2$ is independently selected from a $C_{1-6}$-alkyl group, $C_{1-6}$-alkoxy group and $-Si(R)_3$ group;

each R is independently selected from a $C_{1-10}$-alkyl and a phenyl group optionally substituted by 1 to 3 $C_{1-6}$-alkyl groups; and

each p is 0 or 1.

Preferably, the metallocene-catalysed multimodal polyethylene (mPE) is produced in a multistage polymerisation process in the presence of the metallocene complex of formula (I).

The polyethylene composition may have a $MFR_{21}$ (190°C, 21.6 kg, ISO 1133) in the range from 10 to 30 g/10min.

Preferably, the second polyethylene component (B) has a $MFR_2$ (190°C, 2.16 kg, ISO 1133) in the range of from 0.0001 to 1.0 g/10 min.

The metallocene-catalysed multimodal polyethylene (mPE) (also referred to as the "base resin") may have a density (ISO 1183-1:2019 method A) of from 935 to 955 kg/m$^3$; and/or a $MFR_5$ (190°C, 5.0 kg, ISO 1133) in the range from 1.0 to 2.0 g/10min. The metallocene-catalysed multimodal polyethylene (mPE) may have a density (ISO 1183-1:2019 method A) of from 935 to 955 kg/m$^3$. The metallocene-catalysed multimodal polyethylene (mPE) may have a $MFR_5$ (190°C, 5.0 kg, ISO 1133) in the range from 1.0 to 2.0 g/10min.

The metallocene-catalysed mPE may have a molecular weight distribution (MWD), Mw/Mn, in the range of from 3.0 to 9.0, preferably from 4.0 to 8.0, more preferably from 5.0 to 7.0.

The metallocene-catalysed mPE may additionally have one or more or preferably all of the following properties:

a weight average molecular weight, Mw, determined by Gel Permeation Chromatography (GPC) according to ASTM

D 6474-99, of at least 85000 g/mol, preferably in the range of 100000 to 140000 g/mol, more preferably from 105000 to 120000 g/mol; and/or

a z average molecular weight, Mz, determined by Gel Permeation Chromatography (GPC) according to ASTM D 6474-99, in the range of 220000 to 400000 g/mol, preferably from 230000 to 300000 g/mol and more preferably from 250000 to 275000 g/mol; and/or a ratio of Mz/Mw in the range of from 1.8 to 3.5, preferably from 2.1 to 2.7 and more preferably from 2.2 to 2.5.

The metallocene-catalysed mPE may have a weight average molecular weight, Mw, determined by Gel Permeation Chromatography (GPC) according to ASTM D 6474-99, of at least 85000 g/mol, preferably in the range of 100000 to 140000 g/mol, more preferably from 105000 to 120000 g/mol. The metallocene-catalysed mPE may have a z average molecular weight, Mz, determined by Gel Permeation Chromatography (GPC) according to ASTM D 6474-99, in the range of 220000 to 400000 g/mol, preferably from 230000 to 300000 g/mol and more preferably from 250000 to 275000 g/mol. The metallocene-catalysed mPE may have a ratio of Mz/Mw in the range of from 1.8 to 3.5, preferably from 2.1 to 2.7 and more preferably from 2.2 to 2.5.

Mn, Mw and Mz may be determined by Gel Permeation Chromatography (GPC) according to ASTM D 6474-99.

The first polyethylene component (A) may have a density (ISO 1183-1:2019 method A) in the range of from 950 to 970 kg/m$^3$, preferably from 950 to 960 kg/m$^3$; and/or a MFR$_2$ (190°C, 2.16 kg, ISO 1133) in the range of from 0.5 to 8 g/10 min, optionally from 1.0 to 6 g/10 min. The first polyethylene component (A) may have a density (ISO 1183-1:2019 method A) in the range of from 950 to 970 kg/m$^3$, preferably from 950 to 960 kg/m$^3$; and a MFR$_2$ (190°C, 2.16 kg, ISO 1133-1:2019 method A) in the range of from 0.5 to 8 g/10 min, optionally from 1.0 to 6 g/10 min. The first polyethylene component (A) may have a density (ISO 1183-1:2019 method A) in the range of from 950 to 970 kg/m$^3$, preferably from 950 to 960 kg/m$^3$. The first polyethylene component (A) may have an MFR$_2$ (190°C, 2.16 kg, ISO 1133) in the range of from 0.5 to 8 g/10 min, optionally from 1.0 to 6 g/10 min.

The second polyethylene component (B) may have a one or more or preferably all of a MFR$_2$ (190°C, 2.16 kg, ISO 1133) in the range of from 0.0001 to 1.0 g/10 min; and/or a density (ISO 1183-1:2019 method A) in the range of from 910 to 930 kg/m$^3$, optionally from 915 to 927 kg/m$^3$, further optionally from 920 to 925 kg/m$^3$. The second polyethylene component (B) may have a MFR$_2$ (190°C, 2.16 kg, ISO 1133) in the range of from 0.0001 to 1.0 g/10 min. The second polyethylene component (B) may have a density (ISO 1183-1:2019 method A) in the range of from 910 to 930 kg/m$^3$, optionally from 915 to 927 kg/m$^3$, further optionally from 920 to 925 kg/m$^3$.

## Detailed Description of Invention

*A metallocene-catalysed multimodal polyethylene mPE*

The metallocene-catalysed multimodal mPE of the polyethylene composition of the present disclosure may have a density (ISO 1183-1:2019 method A) in the range of 932 to 955 kg/m$^3$, preferably from 935 to 950 kg/m$^3$ and more preferably from 938 to 945 kg/m$^3$.

The MFR$_2$ (190°C, 2.16 kg, ISO 1133) of the metallocene-catalysed mPE may be in the range of 0.2 to 2.0 g/10 min, preferably from 0.3 to 1.0 g/10 min, more preferably from 0.4 to 0.7 g/10 min.

The MFR$_{21}$ (190°C, 21.6 kg, ISO 1133) of the metallocene-catalysed mPE may be in the range from 10 to 30 g/10min. Suitably the MFR$_{21}$ (190°C, 21.6 kg, ISO 1133) of the metallocene-catalysed mPE may be from 10 to 25 g/10min. Suitably the MFR$_{21}$ (190°C, 21.6 kg, ISO 1133) of the metallocene-catalysed mPE may be from 11 to 22 g/10min.

The metallocene-catalysed mPE according to the present invention furthermore may have a Flow Rate Ratio (FRR) of the MFR$_{21}$/MFR$_5$ in the range of 6.0 to 20.0, preferably from 7.0 to 15.0, and more preferably from 8.0 to 13.0.

The metallocene-catalysed PE may have a molecular weight distribution (MWD), Mw/Mn, in the range of from 3.0 to 8.0, preferably from 4.0 to 6.0, and more preferably from 5.0 to 5.5.

The metallocene-catalysed mPE may have a weight average molecular weight, Mw, of at least 85000 g/mol, preferably in the range of 100000 to 140000 g/mol, more preferably from 105000 to 120000 g/mol.

The metallocene-catalysed PE may have a number average molecular weight, Mn, in the range of from 17000 to 35000 g/mol, preferably from 18000 to 30000 g/mol and more preferably from 20000 to 25000 g/mol. The metallocene-catalysed PE may have a number average molecular weight, Mn, in the range of from 17000 to 35000 g/mol, preferably from 18000 to 30000 g/mol and more preferably from 20000 to 25000 g/mol and a ratio of Mw/Mn in the range of from 3.0 to 8.0, preferably from 4.0 to 6.0, and more preferably from 5.0 to 5.5.

The metallocene-catalysed PE may have a z average molecular weight, Mz, may be in the range of 220000 to 400000 g/mol, preferably from 230000 to 300000 g/mol and more preferably from 250000 to 275000 g/mol. The metallocene-catalysed mPE may have a weight average molecular weight, Mw, of at least 85000 g/mol, preferably in the range of 100000 to 140000 g/mol, more preferably from 105000 to 120000 g/mol and a z average molecular weight, Mz, may be in the range of 220000 to 400000 g/mol, preferably from 230000 to 300000 g/mol and more preferably from 250000

to 275000 g/mol.

The metallocene-catalysed PE may have a ratio of Mz/Mw may be in the range of from 1.8 to 3.5, preferably from 2.1 to 2.7 and more preferably from 2.2 to 2.5. The metallocene-catalysed mPE may have a weight average molecular weight, Mw, of at least 85000 g/mol, preferably in the range of 100000 to 140000 g/mol, more preferably 105000 to 120000 g/mol and a ratio of Mz/Mw may be in the range of from 1.8 to 3.5, preferably from 2.1 to 2.7 and more preferably from 2.2 to 2.5. The metallocene-catalysed PE may have a z average molecular weight, Mz, may be in the range of 220000 to 400000 g/mol, preferably 230000 to 300000 g/mol and more preferably from 250000 to 275000 g/mol and a ratio of Mz/Mw may be in the range of 1.8 to 3.5, preferably 2.1 to 2.7 and more preferably 2.2 to 2.5. The metallocene-catalysed mPE may have a weight average molecular weight, Mw, of at least 85000 g/mol, preferably in the range of 100000 to 140000 g/mol, more preferably 105000 to 120000 g/mol; a z average molecular weight, Mz, may be in the range of 220000 to 400000 g/mol, preferably 230000 to 300000 g/mol and more preferably from 250000 to 275000 g/mol and a ratio of Mz/Mw in the range of from 1.8 to 3.5, preferably from 2.1 to 2.7 and more preferably from 2.2 to 2.5.

The metallocene-catalysed mPE may comprise or may consist of:

(i) from 40 to 52 wt%, based on the total weight of the metallocene-catalysed multimodal polyethylene, of a first polyethylene component (A), optionally wherein the first polyethylene component (A) is a polyethylene homopolymer, and

(ii) from 48 to 60 wt%, based on the total weight of the metallocene-catalysed multimodal polyethylene, of a second polyethylene component (B), optionally wherein the second polyethylene component (B) is a polyethylene copolymer,

wherein the first polyethylene component (A) has a density (ISO 1183-1:2019 method A) in the range of from 945 to 970 kg/m$^3$, and a $MFR_2$ (190°C, 2.16 kg, ISO 1133) in the range of from 0.2 to 10 g/10 min;

the second polyethylene component (B) has a density (ISO 1183-1:2019 method A) in the range of from 900 to 930 kg/m$^3$, and

wherein the metallocene-catalysed mPE has a density (ISO 1183-1:2019 method A) of 935 to 960 kg/m$^3$; and a $MFR_5$ (190°C, 5.0 kg, ISO 1133) in the range from 0.5 to 3.0 g/10min.

The amounts of components (A) and (B) preferably sum up to 100 wt%.

The weight ratio of component (A) to component (B) in the metallocene-catalysed mPE thus is in the range 40:60 to 52:48.

The first polyethylene component (A) and/or (B) can be a homopolymer or an ethylene copolymer.

Alternatively, the first polyethylene component (A) may be a homopolymer and second polyethylene component (B) may be a copolymer or vice versa (i.e., the first polyethylene component (A) being a copolymer and second polyethylene component (B) being a homopolymer).

Preferably, second polyethylene component (B) consists of a single ethylene copolymer or of a single ethylene homopolymer, more preferably of a single ethylene copolymer.

The first polyethylene component (A) may consist of a single ethylene homo- or copolymer. Alternatively, component (A) may be an ethylene polymer mixture comprising (e.g. consisting of) a first ethylene polymer fraction (A-1) and a second ethylene polymer fraction (A-2), whereby both fractions are either a homopolymer or a copolymer. Component (A) may be unimodal or multimodal. In case component (A) is an ethylene copolymer mixture, the comonomer(s) in the first and second ethylene copolymer fractions may be the same or different.

Preferred ethylene copolymers employ alpha-olefins (e.g. $C_3$-$C_{12}$ alpha-olefins) as comonomers. Examples of suitable alpha-olefins include 1-butene, 1-hexene and 1-octene. 1-butene and 1-hexene are especially preferred comonomers.

The first polyethylene component (A) may be a polyethylene homopolymer and the second polyethylene component (B) may be an ethylene-1-hexene copolymer. In this embodiment, the polyethylene homopolymer of component (A) may be formed in the presence of a comonomer but the concentration of comonomer in the resulting polyethylene may be so low as to be below the detection limit of detection methods, such as $^{13}$C-NMR. For example, the comonomer content may be less than 0.2 mol%, preferably less than 0.1 mol%. Where the second polyethylene component (B) is an ethylene-1-hexene copolymer, the amount of C6 in the second polyethylene component (B) may be 0.1 to 5 wt%, preferably 0.5 to 4.0 wt%, more preferably 1.0 to 3.0 wt%.

Preferably, the first polyethylene component (A) may comprise or consist of a first ethylene polymer fraction (A-1) and a second ethylene polymer fraction (A-2), whereby both fractions are either a homopolymer, and the second polyethylene component (B) may be an ethylene copolymer, for example, an ethylene-1-hexene copolymer.

The first polyethylene component (A) preferably has a $MFR_2$ in the range of from 0.5 to 8 g/10 min, more preferably 0.8 to 7 g/10 min, even more preferably from 1.0 to 6 g/10 min.

The density (ISO 1183-1:2019 method A) of first polyethylene component (A) preferably is in the range of 950 to 970 kg/m$^3$, more preferably from 950 to 965 kg/m$^3$ and even more preferably from 950 to 960 kg/m$^3$.

It is further preferred that first polyethylene component (A) comprises at least two fractions, i.e. a first ethylene polymer fraction (A-1) and a second ethylene polymer fraction (A-2),. Component (A) may have a first ethylene homopolymer fraction (A-1) and a second ethylene homopolymer fraction (A-2); a first ethylene copolymer fraction (A-1) and a second ethylene copolymer fraction (A-2); a first ethylene copolymer fraction (A-1) and a second ethylene homopolymer fraction (A-2); or a first ethylene homopolymer fraction (A-1) and a second ethylene copolymer fraction (A-2). In one example, both ethylene polymer fractions (A-1) and (A-2) are ethylene homopolymer fractions.

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The $MFR_2$ and/or the density of fractions (A-1) and (A-2) may be the same or may be different from each other.

The ethylene polymer fraction (A-1) preferably has a $MFR_2$ (190°C, 2.16 kg, ISO 1133) in the range of 0.01 to 20.0 g/10 min, preferably of from 0.1 to 15.0 g/10 min, more preferably of from 0.5 to 12.0 g/10 min and even more preferably of from 0.8 to 10.0 g/10 min.

The ethylene polymer fraction (A-2) preferably has a $MFR_2$ (190°C, 2.16 kg, ISO 1133) in the range of 0.01 to 20.0 g/10 min, preferably of from 0.1 to 15 g/10 min, more preferably of from 0.5 to 12g/10 min and even more preferably of from 1.0 to 10 g/10 min.

The density (ISO 1183-1:2019 method A) of the ethylene polymer fraction (A-1) preferably is in the range of 935 to 980 kg/$m^3$, more preferably from 940 to 965 kg/$m^3$ and even more preferably from 945 to 962 kg/$m^3$.

The ethylene polymer fraction (A-2) preferably has a density (ISO 1183-1:2019 method A) in the range of 935 to 980 kg/$m^3$, more preferably from 945 to 970 kg/$m^3$ and even more preferably from 950 to 965 kg/$m^3$.

Preferably, the density of fraction (A-2) is higher than the density of fraction (A-1).

The second polyethylene component (B) preferably has a $MFR_2$ in the range of 0.0001 to 1.0 g/10 min.

The density (ISO 1183-1:2019 method A) of the second polyethylene component (B) preferably is in the range of from 910 to 930 kg/$m^3$, more preferably from 913 to 928 kg/$m^3$, even more preferably from 915 to 927 kg/$m^3$, most preferably from 920 to 925 kg/$m^3$.

The metallocene-catalysed mPE may be produced by polymerization using conditions which create a multimodal (e.g. bimodal) polymer product using a metallocene catalyst system.

Thus, the metallocene-catalysed mPE of embodiment (I) can be produced in a 2-stage process, preferably comprising a slurry reactor (loop reactor), whereby the slurry (loop) reactor is connected in series to a gas phase reactor (GPR), whereby either first polyethylene component (A) or second polyethylene component (B) is produced in the loop reactor and the other ethylene polymer component is then produced in GPR in the presence of the first produced ethylene polymer component to produce the metallocene-catalysed mPE, preferably the first polyethylene component (A) is produced in the loop reactor and the second polyethylene component (B) is produced in GPR in the presence of the first polyethylene component (A) to produce the metallocene-catalysed mPE.

In case that the first polyethylene component (A) of the metallocene-catalysed mPE consists of ethylene polymer fractions (A-1) and (A-2), the metallocene-catalysed mPE can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

It is within the scope of the invention, that the first and the second ethylene polymer fraction (A-1 and A-2) of the first polyethylene component (A) are present in a weight ratio of 4:1 up to 1:4, such as 3:1 to 1:3, or 2:1 to 1:2, or 1:1, based on the total weight of the first polyethylene component (A).

The first and the second polymerization stages are preferably slurry polymerization steps. The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in each of the first and second polymerization stages is typically from 60 to 100°C, preferably from 70 to 90°C. An excessively high temperature should be avoided to prevent partial dissolution of the polymer into the diluent and the fouling of the reactor. The pressure is from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first and second polymerization stages as

slurry polymerizations in two consecutive loop reactors.

The slurry may be withdrawn from each reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from each of the first and second polymerization stages continuously.

Hydrogen is typically introduced into the first and second polymerization stages for controlling the $MFR_2$ of the first and second ethylene polymers. The amount of hydrogen needed to reach the desired MFR depends on the catalyst used and the polymerization conditions.

The loop reactor 2 is thereby connected in series to a gas phase reactor (GPR), so that the first polyethylene component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

The third polymerization stage is a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

A chain transfer agent (e.g. hydrogen) is typically added to the third polymerization stage.

Such a process is described inter alia in WO 2016/198273, WO 2021009189, WO 2021009190, WO 2021009191 and WO 2021009192. Full details of how to prepare suitable multimodal polymers can be found in these references.

A suitable process is the Borstar PE process or the Borstar PE 3G process.

The metallocene-catalysed mPE according to the present invention is therefore preferably produced in a loop loop gas cascade.

Polymerisation may be preceded by a prepolymerization step.

The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry. Thus, the prepolymerization step may be conducted in a loop reactor.

The prepolymerization may be preferably conducted in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 45 to 75°C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount, which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene-catalysed mPE. This can be counted as part of the first polyethylene component (A).

*Catalyst*

The metallocene-catalysed mPE of the invention is one made using a metallocene catalyst. A metallocene catalyst comprises a metallocene complex and a cocatalyst. The metallocene compound or complex is referred herein also as organometallic compound (C).

Metallocene catalysts comprise a transition metal compound which contains a cyclopentadienyl, indenyl or fluorenyl ligand. Preferably the catalyst contains two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO- A-97/28170, WO-A-98/32776, WO-A-99/61489, WO-A-03/010208, WO-A-03/051934, WO-A-03/051514, WO-A-2004/085499, EP-A- 1752462 and EP-A-1739103.

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

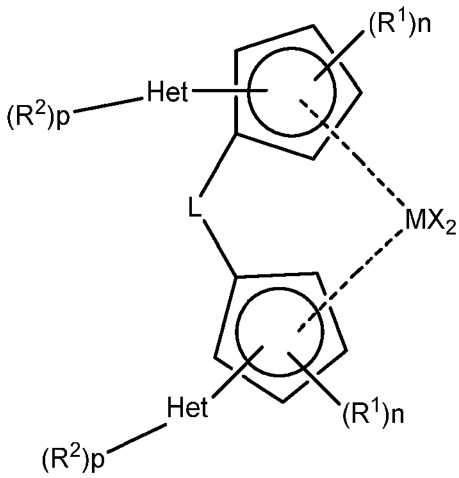

(I)

wherein each X is independently selected from a halogen atom, a $C_{1-6}$-alkyl group, a $C_{1-6}$-alkoxy group, a phenyl group and a benzyl group;

each Het is independently a monocyclic heteroaromatic group containing at least one heteroatom selected from O and S;

L is $-R'_2Si-$, wherein each R' is independently selected from $C_{1-20}$-hydrocarbyl substituted with alkoxy having 1 to 10 carbon atoms or $C_{1-10}$-alkyl substituted with alkoxy having 1 to 10 carbon atoms;

M is selected from Ti, Zr and Hf;

each $R_1$ is independently selected from a $C_{1-6}$-alkyl group and $C_{1-6}$-alkoxy group;

each n is 1 or 2;

each $R_2$ is independently selected from a $C_{1-6}$-alkyl group, $C_{1-6}$-alkoxy group and $-Si(R)_3$ group;

each R is independently selected from a $C_{1-10}$-alkyl and a phenyl group optionally substituted by 1 to 3 $C_{1-6}$-alkyl groups; and

each p is 0 or 1.

Preferably, the compound of formula (I) has the structure of formula (I'):

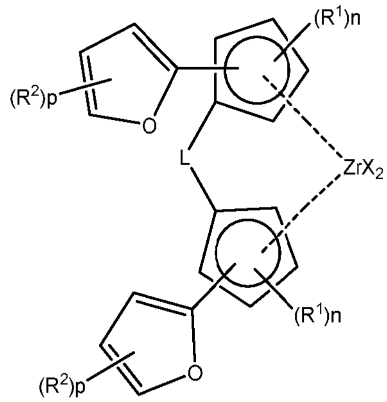

(I′)

wherein each X is independently selected from a halogen atom, a $C_{1-6}$-alkyl group, a $C_{1-6}$-alkoxy group, a phenyl and a benzyl group;
L is a $Me_2Si$-;
each $R^1$ is the same or different and is a $C_{1-6}$-alkyl group, e.g. methyl or t-Bu;
each n is 1 or 2;
$R^2$ is a -$Si(R)_3$ alkyl group; each p is 1;
each R is $C_{1-6}$-alkyl or phenyl group.

Highly preferred complexes of formula (I) have the structural formula of:

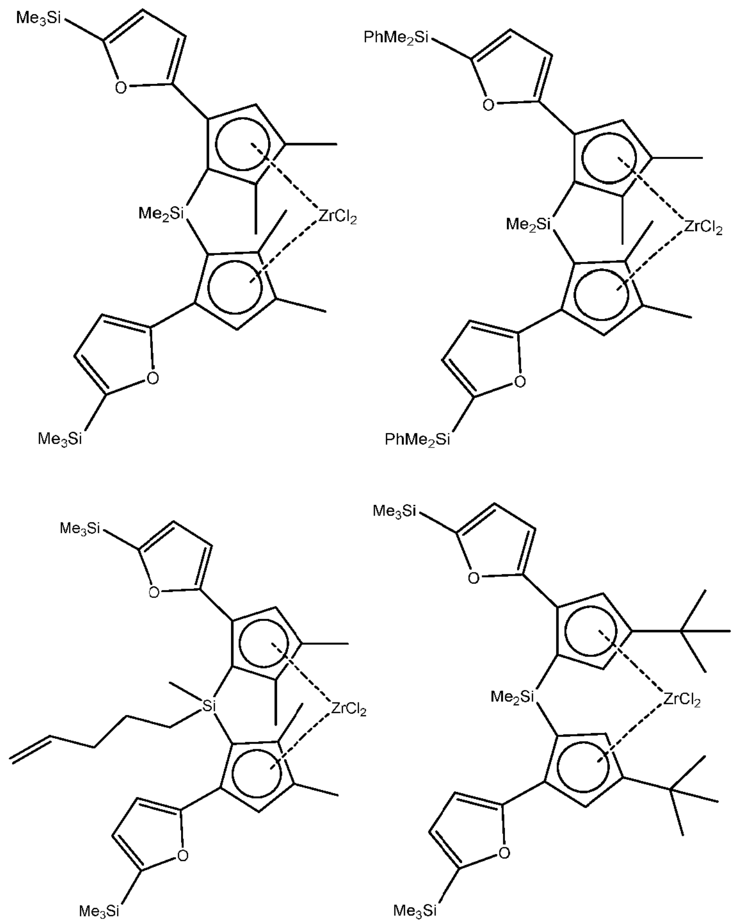

Most preferably the complex dimethylsilanediylbis[2-(5-trimethylsilylfuran-2-yl)-4,5-dimethylcyclopentadien-1-yl] zirconium dichloride is used.

More preferably the polyethylene components (A) and (B) of the metallocene-catalysed mPE are produced

using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

An aspect of the present disclosure relates to a process for producing a polyethylene composition according to the present disclosure wherein the metallocene-catalysed multimodal polyethylene is produced in the presence of metallocene complex of formula (I).

*Polyethylene composition*

The polyethylene composition of the present disclosure has desirable resistance to slow crack growth resistance. The slow crack growth resistance of a pipe material is imparted to the material by the metallocene-catalysed multimodal polyethylene (mPE) present in the polyethylene composition of the present disclosure. The polyethylene composition of the disclosure can achieve a desirably high resistance to slow crack growth. At the same time, the polyethylene composition exhibits desirable strength e.g., tensile strength characteristics, as evidence by desirable yield stresses. The polyethylene composition of the disclosure may display a particularly advantageous balance of tensile strength and resistance to slow crack growth.

The yield stress of the composition is the highest stress the composition will experience before plastic deformation occurs. One way to measure the yield strength is with a tensile test. The tensile test may be carried out in accordance with ISO 527-1. The test may be carried out using a 5A (ISO 527-2) test specimen. The test specimen may be extended along its major longitudinal axis at constant speed. During this procedure, the load sustained by the specimen and the elongation, using the crosshead and following the ISO 527-1 (method A), are measured.

The polyethylene composition may have a yield stress (test speed 0.3 mm/min) of 4.0 MPa or higher; 4.5 MPa or higher; 5.0 MPa or higher; 5.5 MPa or higher, 6.0 MPa or higher or 6.5 MPa or higher. The yield stress (test speed 0.3 mm/min) may be at most 20 MPa, at most 18 MPa, at most 15 MPa, at most 12 MPa or at most 10 MPa. For example, the yield stress (test speed 0.3 mm/min) may be from 4.5 to 20 MPa, from 5.0 to 18 MPa, from 5.5 to 15 MPa, from 6.0 to 12 MPa or from 6.5 to 10 MPa.

To fulfil the requirements for a PE100 pipe material, the density of the polyethylene composition may be at least 945 kg/$m^3$, more preferably of from 945 to 951 kg/$m^3$ .

The polyethylene composition of the present disclosure may comprise carbon black. Carbon black imparts black colour to the polyethylene composition and, at the same time, protects the composition from UV radiation. Still further, the addition of carbon black increases the density of the polyethylene composition compared to that of the multimodal medium density polyethylene.

Suitably the polyethylene composition may comprise within the range of from 0.5 to 5 weight % of the total composition. Preferably, carbon black is present in the polyethylene composition in an amount of from 1 to 4 wt.%, more preferably of from 2.0 to 2.5 wt. % of the total composition.

Usually, the amount of carbon black added is selected so that the density (ISO 1183-1:2019 method A) of the carbon black-containing polyethylene composition is from 8 to 15 kg/$m^3$ , more preferably from 9 to 14 kg/$m^3$ higher than that of the multimodal medium density polyethylene. Carbon black is usually added in the form of a master batch, i.e. as a mixture of e.g. an HDPE and carbon black, in which carbon black is present in an amount of e.g. 30 to 50 wt.%. In embodiments comprising carbon black, the polyethylene composition may have a density (ISO 1183-1:2019 method A) of 945 to 960 kg/$m^3$, preferably 948-958 kg/$m^3$.

In addition to the multimodal medium density polyethylene and carbon black, usual additives for utilization with polyolefins, such as pigments, stabilizers (antioxidant agents), antiacids, antistatic agents and utilization agents (such as processing aid agents) may be present in the polyethylene composition. Preferably, the amount of these additives is 10 wt.% or below, further preferred 8 wt.% or below, still more preferred 5 wt.% or below, and still more preferred 4 wt.% or below of the total composition. The further additives more preferably are present in amount of 3 wt.% or less, more preferred of 2.5 wt.% or less, and most preferred of 2 wt.% or less.

Preferably, the multimodal medium density polyethylene makes up at least 92 wt.%, more preferably at least 93 wt.%, and still more preferably at least 94 wt.% of the polyethylene composition.

The composition of the invention preferably is produced in a process comprising a compounding step, wherein the multimodal medium density polyethylene produced from the reactor is extruded in an extruder and then pelletised to polymer pellets in a manner known in the art. The extruder may be e.g. any conventionally used extruder. As an example of an extruder for the present compounding step may be those supplied by Japan Steel works, Kobe Steel, Coperion or

Farrel-Pomini.

The resulting polyethylene composition may be extruded to form a pipe using known methods.

Any polyethylene composition of the disclosure may be used for producing a pipe. In an aspect the disclosure relates to the use of a polyethylene composition of the disclosure for producing a pipe.

An exemplary embodiment of the present disclosure relates to a polyethylene composition comprising a metallocene-catalysed multimodal polyethylene (mPE) and from 0.5 to 5 weight % carbon black, based on the total weight of the polyethylene composition; wherein the metallocene-catalysed multimodal polyethylene (mPE) comprises:

(i) from 40 to 52 wt%, based on the total weight of the metallocene-catalysed multimodal polyethylene, of a first polyethylene component (A), optionally wherein the first polyethylene component (A) is a polyethylene homopolymer, and

(ii) from 48 to 60 wt%, based on the total weight of the metallocene-catalysed multimodal polyethylene, of a second polyethylene component (B), optionally wherein the second polyethylene component (B) is a polyethylene copolymer,

wherein the first polyethylene component (A) has a density (ISO 1183-1:2019 method A) in the range of from 945 to 970 kg/m$^3$, and a $MFR_2$ (190°C, 2.16 kg, ISO 1133) in the range of from 0.2 to 10 g/10 min;

the second polyethylene component (B) has a density (ISO 1183-1:2019 method A) in the range of from 900 to 930 kg/m$^3$, and

wherein the polyethylene composition has a density (ISO 1183-1:2019 method A) of 935 to 960 kg/m$^3$; and a $MFR_5$ (190°C, 5.0 kg, ISO 1133) in the range from 0.5 to 3.0 g/10min.

As discussed above, the component (A) may comprise or consist of a blend of at least two components, for example, a blend of a component (A-1) and component (A-2). Components (A-1) and (A-2) may be homopolymers, while component (B) may be an ethylene copolymer.

As mentioned above, the ethylene polymer fraction (A-1) preferably has a $MFR_2$ (190°C, 2.16 kg, ISO 1133) in the range of 0.2 to 20.0 g/10 min, preferably of from 0.4 to 15.0 g/10 min, more preferably of from 0.7 to 10.0 g/10 min and even more preferably of from 0.9 to 7.0 g/10 min, like from 1.0 to 6.0 g/10 min.

The ethylene polymer fraction (A-2) preferably has a $MFR_2$ (190°C, 2.16 kg, ISO 1133) in the range of 0.2 to 20.0 g/10 min, more preferably of from 0.5 to 15.0 g/10 min, even more preferably of from 1.0 to 10.0 g/10 min and most preferably of from 2.0 to 5.0 g/10 min.

The density (ISO 1183-1:2019 method A) of the ethylene polymer fraction (A-1) preferably is in the range of 935 to 960 kg/m$^3$, more preferably from 940 to 955 kg/m$^3$ and even more preferably from 950 to 955 kg/m$^3$.

The ethylene polymer fraction (A-2) preferably has a density (ISO 1183-1:2019 method A) in the range of 950 to 975 kg/m$^3$, more preferably from 955 to 965 kg/m$^3$.

Preferably, the density of fraction (A-2) is higher than the density of fraction (A-1).

The polyethylene composition preferably has a ratio of Mz/Mw in the range of from 1.8 to 3.5, preferably from 2.1 to 2.7 and more preferably from 2.2 to 2.5.

The polyethylene composition preferably has a molecular weight distribution (MWD), Mw/Mn, in the range of from 3.0 to 8.0, preferably from 4.0 to 6.0, and more preferably from 5.0 to 5.5.

Yield stress may be measured using a tensile test according to ISO 527-1.

Unless explicitly described otherwise, the description of the present invention is to be understood so that one or more of any of the above described preferred embodiments of the invention can be combined with the invention described in its most general features.

## Examples

### Determination methods

Unless otherwise stated in the description or in the experimental part, the following methods were used for the property determinations of the polymers (including its fractions and components) and/or any sample preparations thereof as specified in the text or experimental part.

### Melt Flow Rate

The melt flow rate (MFR) was determined according to ISO 1133 and is indicated in g/10 min. The MFR is an

indication of the flowability, and hence the processability, of the polymer. The MFR is determined at 190 °C for polyethylene. MFR may be determined at different loadings such as 2.16 kg ($MFR_2$), 5 kg (MFRs) or 21.6 kg ($MFR_{21}$).

*Calculation of $MFR_2$ of Component B and of Fraction (A-2)*

$$logA = x \cdot logB + (1-x) \cdot logC$$

$$C = 10^{\wedge}\frac{(logA - x.logB)}{(1-x)}$$

*For Component B:*

B = $MFR_2$ of Component (A)
C = $MFR_2$ of Component (B)
A = final $MFR_2$ (mixture) of multimodal mPE
X = weight fraction of Component (A).

*For Fraction (A-2):*

B = $MFR_2$ of $1^{st}$ fraction (A-1)
C = $MFR_2$ of $2^{nd}$ fraction (A-2)
A = final $MFR_2$ (mixture) of loop polymer (= Component (A))
X = weight fraction of the $1^{st}$ fraction (A-1).

The quantity FRR (flow rate ratio) is an indication of molecular weight distribution and denotes the ratio of flow rate at different loadings. The FRR denotes the value of $MFR_{21}/MFR_5$.

**Density**

Density of the polymer was measured according to ISO 1183-1:2019 (method A) on compression moulded specimens prepared according to ISO17855-2 and is given in $kg/m^3$.

**Yield Stress**

Tensile test was conducted according to ISO 527-1/-2 by using a 5A (ISO 527-2) test specimen. The test specimen is extended along its major longitudinal axis at constant speed. During this procedure, the load sustained by the specimen and the elongation, using the crosshead and following the ISO 527-1 (method A), are measured.

Standard conditions:

- Conditioning time: > 96 h at 23 ±2 °C ±10 %rh
- Test temperature: 80 °C
- Gripping distance: 50 mm
- Testspeed: 0.3 mm/min, 0.09 mm/min or 0.03 mm/min
- Test results:
    - Stress at yield (MPa)

**Short term pressure resistance**

The pressure test on un-notched 32 mm SDR 11 pipes having a length of 450 mm is carried out in water-inside and water-outside environment according to ISO 1167-1:2006. End caps type A were used. The time to failure is

determined in hours. A hoop stress of 5.4-5.8 MPa and a temperature of 80 °C, or a hoop stress of 4.1 MPa and a temperature of 95 °C were applied, depending on which experiment was run.

**GPC**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ASTM D 6474-99 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g, \quad \alpha_{PS} = 0.655$$

$$K_{PE} = 39 \times 10^{-3}\ mL/g, \quad \alpha_{PE} = 0.725$$

$$K_{PP} = 19 \times 10^{-3}\ mL/g, \quad \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

To exclude the influence of additives such as antioxidants or some other low molecular weight oligomers, the low molecular weight integration limit was set in the valley between the antioxidant peak and the polymer peak (~ logM of 2.8 (PE equivalent) for the analysed samples).

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm

magic-angle spinning (MAS) probe head at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I\delta_{+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the *B2 sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the *B4 sites at 38.3 ppm accounting for the number of reporting sites per comonomer:

$$H = I_{*B4}$$

If present the amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128.

Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239.

Griffin, J.M., Tripon, C., Samoson, A., Filip, C., and Brown, S.P., Mag. Res. in Chem. 200745, S1, S198.

Castignolles, P., Graf, R., Parkinson, M., Wilhelm, M., Gaborieau, M., Polymer 50 (2009) 2373

Busico, V., Cipullo, R., Prog. Polym. Sci. 26 (2001) 443.

Busico, V., Cipullo, R., Monaco, G., Vacatello, M., Segre, A.L., Macromoleucles 30 (1997) 6251.

Zhou, Z., Kuemmerle, R., Qiu, X., Redwine, D., Cong, R., Taha, A., Baugh, D. Winniford, B., J. Mag. Reson. 187 (2007) 225.

Busico, V., Carbonniere, P., Cipullo, R., Pellecchia, R., Severn, J., Talarico, G., Macromol. Rapid Commun. 2007, 28, 1128.

Resconi, L., Cavallo, L., Fait, A., Piemontesi, F., Chem. Rev. 2000, 100, 1253.

**Examples:**

**Cat. Example: Catalyst preparation for CAT1 for Comparative Examples CE1 and Inventive Examples IE1 and IE2**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel. Here MC refers to metallocene.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

The catalysts were prepared following the preparation procedure as disclosed in the Catalyst Example 1 (C-IE1) of WO 2022/268961.

**Polymerization:**

Borstar pilot plant with a 3-reactor set-up (loop1 - loop2 - GPR 1) and a prepolymerization loop reactor.

CE2 was prepared using the same catalyst and following the same polymerization procedure as disclosed in Example 1 (preparation of the catalyst) and Example 2 (inventive material A) of WO-2000/022040.

**Table 1:** Polymerization conditions

| | CE1 | IE1 | IE2 |
|---|---|---|---|
| Catalyst | CAT 1 | CAT 1 | CAT 1 |
| **Prepolymerisation reactor** | | | |
| Temp. (°C) | 50 | 50 | 50 |
| Press. (kPa) | 5747 | 5710 | 5700 |

(continued)

| | CE1 | IE1 | IE2 |
|---|---|---|---|
| Split (wt%) | 3.5 | 3.8 | 3.3 |
| **Loop 1 - Fraction A-1** | | | |
| Temp. (°C) | 85 | 85 | 85 |
| Press. (kPa) | 5550 | 5466 | 5444 |
| C2 conc. (mol-%) | 5.4 | 2.9 | 2.9 |
| H2/C2 ratio (mol/kmol) | 0.78 | 0.38 | 0.29 |
| C4/C2 ratio (mol/kmol) | 3.8 | 5.0 | 6.0 |
| split % | 21.5 | 20.4 | 16.1 |
| MFR2 of Fraction A-1 (g/10 min) | 30.0 | 5.4 | 1.2 |
| **Loop 2 - Fraction A-2** | | | |
| Temp. (°C) | 85 | 85 | 85 |
| Press. (kPa) | 5356 | 5273 | 5247 |
| C2 conc. (mol-%) | 5.3 | 3.1 | 3.4 |
| H2/C2 ratio (mol/kmol) | 0.87 | 0.3 | 0.3 |
| C4/C2 ratio (mol/kmol) | 2 | 2 | 2 |
| Split (%) | 23.9 | 24.8 | 21.6 |
| Density (kg/m3) after loop 2 (Component A) | 968.5 | 957.2 | 957.2 |
| MFR2 (g/10 min) after loop 2 (Component A) | 138.0 | 3.0 | 3.3 |
| **A3 GPR** | | | |
| Temp. (°C) | 80 | 80 | 80 |
| Press. (kPa) | 2000 | 2000 | 2000 |
| H2/C2 ratio (mol/kmol) | 0.49 | 0.59 | 0.56 |
| C6/C2 ratio (mol/kmol) | 4.61 | 2.93 | 2.09 |
| split % | 51.1 | 51.0 | 59.1 |

**Pelleting**

The polymer of IE1,IE2 and CE1 was mixed with 0.027 wt% FX 5922 (3M Dynamar Polymer Processing Additive) and 0.24 wt% Irganox B 561 (BASF), where wt% are relative to total weight of composition (the sum of mPE powder + additive = 100%) compounded and extruded on a ZSK 57 twin screw extruder. The melt temperature was 224°C, production rate was 221kg/h.

The resulting pellets were then re-pelletized with 5.5 weight % of a carbon black masterbatch, 0.26 weight % antioxidants and 0.04 weight % calcium stearate. The resulting carbon black content of the polyethylene composition was 2.2 weight %. Compounding and extrusion was done on a co-rotating twin screw extruder ZSK 18. The temperature in the beginning of the melting zone of the extruder was set to 150 °C and in all the remaining zones to 230 °C. The throughput was 1 kg/h and the screw speed was 120 RPM.

The polymer of CE2 was pelletized with 5.5 weight % of a carbon black masterbatch and the same additive package used in IE1 and IE2 re-pelletization. The resulting carbon black content of the polyethylene composition was 2.2 weight %. Compounding and extrusion was done on a JSW CIMP90 twin screw extruder with the melt temperature of about 280 °C.

**Pipe extrusion**

Pipe extrusion of 32x3 mm (outer diameter x wall thickness) pipes was performed on a Krauss-Maffei 45-36D (L/D) single screw extruder. The extruder has a modified PP-barrier screw installed with four heated cylinder zones and five

tool zones. The downstream equipment is a 9m spray- cooling vacuum tank with two chambers and a defined water temperature of 20 °C.

The samples have been processed at an output rate of 50 kg/h and a screw speed of the extruder of ~ 57 rpm. The achieved melt temperature was 220-221 °C at a melt pressure of 213-216 bars. All samples have been produced at a constant meter weight of 280 g/m and a line speed of 2,97 m/minute.

**Table 2:** Temperature profile for pipe extrusion:

| | Temperature profile 32x3 mm pipes [°C] |
|---|---|
| Inlet zone | 75 |
| Barrel zone 1 | 220 |
| Barrel zone 2 | 215 |
| Barrel zone 3 | 210 |
| Barell zone 4 | 210 |
| Barrel zone 5 | 200 |
| Adaptor | 200 |
| Tool zone 1 | 200 |
| Tool zone 2 | 200 |
| Tool zone 3 | 200 |
| Tool zone 4 | 210 |
| Tool zone 5 | 210 |

In Table 3, unless otherwise stated, the properties referred to as being those of the mixer (e.g. mixer density, mixer MFR2, etc.) mean the properties measured for the polyethylene product obtained from the multistage polymerization reactor prior to pelleting/extrusion. BR refers to base resin.

**Table 3:** Material properties of polyethylene compositions of CE1, CE2, !E1 and IE2

| | Units | CE1 | CE2 | IE1 | IE2 |
|---|---|---|---|---|---|
| Loop 1 MFR (component A) | dg/min | 30 | | 5,4 | 1,2 |
| Loop 1 density (component A) | kg/m$^3$ | -950,6 | | 953,5 | -953,5 |
| Loop 2 MFR (component A) | dg/min | 138 | 280 | 3 | 3,3 |
| Loop 2 density (component A) | kg/m$^3$ | >965,2 | 970 | 957,2 | -957,2 |
| GPR% (component B) | % | 50,5% | 54,0% | 49,9% | 58,2% |
| | | | | | |
| Mixer density | kg/m$^3$ | 940,1 | 947 | 939,9 | 938,4 |
| Mixer MFR2 | dg/min | 0,62 | | 0,62 | 0,43 |
| Mixer MFR5 | dg/min | 2,06 | 0,3 | 1,84 | 1,31 |
| Mixer MFR21 | dg/min | 31,3 | 10,5 | 17,5 | 11,8 |
| Calculated GPR density (component B) | | 915,5 | 927,4 | 922,5 | 924,9 |
| C6wt% of base resin | wt% | 2,5 | | 1,4 | 1,1 |
| C4wt% of base resin | wt% | | 1,4 | | |
| C6 wt% in GPR in BR | wt% | 4,9 | 2,6 | 2,7 | 1,9 |
| C6wt% in FB | wt% | 2,6 | | 1,4 | 1,2 |
| Pellet MFR5 | dg/min | 2,09 | 0,2 | 1,92 | 1,3 |
| Pellet MFR21 | dg/min | 30,4 | 8,5 | 20,54 | 13,88 |

(continued)

| | Units | CE1 | CE2 | IE1 | IE2 |
|---|---|---|---|---|---|
| Pellet density | $kg/m^3$ | 951,2 | 959 | 950,9 | 950,1 |
| Mn | | 12,95 | 7 | 20,6 | 21,8 |
| Mw | | 104 | 184 | 110,5 | 118,5 |
| Mz | | 296,5 | 921 | 268 | 270,5 |
| PDI | | 8,0 | 26,3 | 5,4 | 5,4 |
| WSR | | 0,25 | | 4 | 1 |
| Yield stress at 0,3mm/min | MPa | 6,43 | | 7,06 | 7,21 |
| Yield stress at 0,09mm/min | MPa | 6,28 | | 6,94 | 7,09 |
| Yield stress at 0,03mm/min | MPa | 6,18 | | 6,84 | 7,05 |

**Table 4:** Pipe testing results

| | Units | CE1 | CE2 | IE1 | IE2 |
|---|---|---|---|---|---|
| 5,8 MPa / 80°C | h | | | 158,7 | >845 |
| 5,8 MPa / 80°C | h | | | 107,5 | 290,2 |
| 5,7 MPa / 80°C | h | | 113 | | |
| 5,6 MPa / 80°C | h | | 166 | | |
| 5,4 MPa / 80°C | h | 156,4 | | >10751 | >10751 |
| 5,4 MPa / 80°C | h | 151,7 | | >10751 | >10751 |
| 4,1 MPa / 95°C | h | 60,3 | | >10609 | >10609 |
| 4,1 MPa / 95°C | h | 262,6 | | >10609 | >10609 |

PDI refers to the polydispersity index. Used herein the terms polydispersity index (PDI), molecular weight distribution (MWD), and Mw/Mn are synonymous. Measurements relating to the pellet relate to the pellet after all pelleting steps have been performed. GPR% refers to the amount of the metallocene-catalysed multimodal polyethylene which was polymerised in the GPR expressed as a weight percentage of the total metallocene-catalysed multimodal polyethylene weight. BR refers to base resin. FB refers to final blend, in the form of final pellets. WSR refers to white spot rating, as determined using an optical microscope.

The polyethylene compositions of the invention IE1 and IE2 show higher yield stresses than CE1 at all loading rates tested, demonstrating that polyethylene compositions of the invention may be associated with improved strength. The polyethylene compositions of the invention !E1 and IE2 can be formed into pipes which show long lifetimes at high temperatures, even when the pipes are exposed to high stresses. These lifetimes under stress at high temperatures are much greater than is seen in the prior art. These data demonstrate that compositions of the invention are especially suitable for use in pipes which will be exposed to high temperatures. In table 4 "h" refers to hours.

## Claims

1. A polyethylene composition comprising a metallocene-catalysed multimodal polyethylene wherein the metallocene-catalysed multimodal polyethylene comprises:

   (i) from 40 to 52 wt%, based on the total weight of the metallocene-catalysed multimodal polyethylene, of a first polyethylene component (A), optionally wherein the first polyethylene component (A) is a polyethylene homopolymer, and
   (ii) from 48 to 60 wt%, based on the total weight of the metallocene-catalysed multimodal polyethylene, of a second polyethylene component (B), optionally wherein the second polyethylene component (B) is a polyethylene copolymer,
   wherein the first polyethylene component (A) has a density (ISO 1183-1:2019 method A) in the range of from 945

to 970 kg/$m^3$, and a $MFR_2$ (190°C, 2.16 kg, ISO 1133) in the range of from 0.2 to 10 g/10 min;
the second polyethylene component (B) has a density (ISO 1183-1:2019 method A) in the range of from 900 to 930 kg/$m^3$, and
wherein the polyethylene composition has a density (ISO 1183 -1:2019 method A) of 935 to 960 kg/$m^3$; and a $MFR_5$ (190°C, 5.0 kg, ISO 1133) in the range from 0.5 to 3.0 g/10min.

**2.** The polyethylene composition according to claim 1, wherein the metallocene-catalysed multimodal polyethylene has a $MFR_{21}$ (190°C, 21.6 kg, ISO 1133) in the range from 10 to 30 g/10min, optionally from 10 to 25 g/10min, further optionally from 11 to 22 g/10min.

**3.** The polyethylene composition according to any one of the preceding claims, wherein the first polyethylene component (A) has one or more or preferably all of:

a density (ISO 1183-1:2019 method A) in the range of from 950 to 970 kg/$m^3$, preferably from 950 to 960 kg/$m^3$; and/or
a $MFR_2$ (190°C, 2.16 kg, ISO 1133) in the range of from 0.5 to 8 g/10 min, optionally from 1.0 to 6 g/10 min.

**4.** The polyethylene composition according to any one of the preceding claims, wherein the second polyethylene component (B) has one or more or preferably all of:

a $MFR_2$ (190°C, 2.16 kg, ISO 1133) in the range of from 0.0001 to 1.0 g/10 min; and/or
a density (ISO 1183-1:2019 method A) in the range of from 910 to 930 kg/$m^3$, optionally from 915 to 927 kg/$m^3$, further optionally from 920 to 925 kg/$m^3$.

**5.** The polyethylene composition according to any one of the preceding claims, wherein the metallocene-catalysed multimodal polyethylene has a density (ISO 1183-1:2019 method A) of from 935 to 955 kg/$m^3$; and/or a $MFR_5$ (190°C, 5.0 kg, ISO 1133) in the range from 1.0 to 2.0 g/10min.

**6.** The polyethylene composition according to any one of the preceding claims, wherein the metallocene-catalysed multimodal polyethylene has a molecular weight distribution (MWD), Mw/Mn, in the range of from 3.0 to 9.0, preferably from 4.0 to 8.0, more preferably from 5.0 to 7.0.

**7.** The polyethylene composition according to any one of the preceding claims, wherein the metallocene-catalysed multimodal polyethylene has one or more or preferably all of the following properties:

a weight average molecular weight, Mw, determined by Gel Permeation Chromatography (GPC) according to ASTM D 6474-99, of at least 85000 g/mol, preferably in the range of 100000 to 140000 g/mol, more preferably 105000 to 120000 g/mol; and/or
a z average molecular weight, Mz, determined by Gel Permeation Chromatography (GPC) according to ASTM D 6474-99, in the range of 220000 to 400000 g/mol, preferably 230000 to 300000 g/mol and more preferably from 250000 to 275000 g/mol; and/or
a ratio of Mz/Mw in the range of from 1.8 to 3.5, preferably from 2.1 to 2.7 and more preferably from 2.2 to 2.5.

**8.** The polyethylene composition according to any one of the preceding claims, wherein the metallocene-catalysed multimodal polyethylene has one or more or preferably all of the following properties:

a number average molecular weight, Mn, determined by Gel Permeation Chromatography (GPC) according to ASTM D 6474-99, in the range of from 17000 to 35000 g/mol, preferably from 18000 to 30000 g/mol and more preferably from 20000 to 25000 g/mol; and/or
a ratio of Mw/Mn in the range of from 3.0 to 8.0, preferably from 4.0 to 6.0, and more preferably from 5.0 to 5.5.

**9.** The polyethylene composition according to any one of the preceding claims, wherein the metallocene-catalysed multimodal polyethylene has a $MFR_2$ (190°C, 2.16 kg, ISO 1133) in the range of from 0.2 to 2.0 g/10 min, preferably from 0.3 to 1.0 g/10 min, more preferably from 0.4 to 0.7 g/10 min.

**10.** The polyethylene composition according to any one of the preceding claims, which has a yield stress at 0.3mm/min of 4.0 MPa or higher, 4.5 MPa or higher, 5.0 MPa or higher, 5.5 MPa or higher, 6.0 MPa or higher, or 6.5 MPa or higher; optionally wherein the yield stress at 0.3mm/min is from 4.0 MPa to 9.0 MPa, from 4.5 MPa to 9.0 MPa, from 5.0 MPa to

9.0 MPa, from 5.5 MPa to 9.0 MPa, from 6.0 MPa to 9.0 MPa, or from 6.5 MPa to 9.0 MPa.

**11.** The polyethylene composition according to any one of the preceding claims which comprises within the range of from 0.5 to 5 weight % carbon black, based on the total weight of the polyethylene composition.

**12.** A process for producing a polyethylene composition according to any one of the preceding claims, wherein the metallocene-catalysed multimodal polyethylene is produced in the presence of metallocene complex of formula (I):

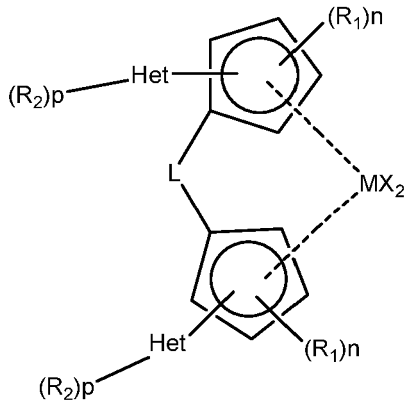

(I)

wherein each X is independently selected from a halogen atom, a $C_{1-6}$-alkyl group, a $C_{1-6}$-alkoxy group, a phenyl and a benzyl group;
each Het is independently a monocyclic heteroaromatic group containing at least one heteroatom selected from O and S;
L is $-R'_2Si-$, wherein each R' is independently selected from $C_{1-20}$-hydrocarbyl substituted with alkoxy having 1 to 10 carbon atoms and $C_{1-10}$-alkyl substituted with alkoxy having 1 to 10 carbon atoms;
M is selected from Ti, Zr and Hf;
each $R_1$ is independently selected from a $C_{1-6}$-alkyl group and $C_{1-6}$-alkoxy group;
each n is 1 or 2;
each $R_2$ is independently selected from a $C_{1-6}$-alkyl group, $C_{1-6}$-alkoxy group and $-Si(R)_3$ group;
each R is independently selected from a $C_{1-10}$-alkyl and a phenyl group optionally substituted by 1 to 3 $C_{1-6}$-alkyl groups; and
each p is 0 or 1.

**13.** A pipe or pipe fitting comprising the polyethylene composition according to any one of claims 1 to 11, optionally wherein the pipe or pipe fitting has one or more or preferably all of:

a lifetime of greater than 100 hours under a longitudinal tensile stress of 5.8 MPa at a temperature of 80 °C;
a lifetime of greater than 10000 hours under a longitudinal tensile stress of 5.4 MPa at a temperature of 80 °C; and/or
a lifetime of greater than 10000 hours under a longitudinal tensile stress of 4.1 MPa at a temperature of 95 °C.

**14.** Use of a polyethylene composition according to any one of claims 1 to 11 for producing a pipe.

Europäisches Patentamt
European Patent Office
Office européen des brevets

# EUROPEAN SEARCH REPORT

Application Number
EP 25 15 5320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2024/074320 A1 (BOREALIS AG [AT]) 11 April 2024 (2024-04-11)<br>* claims 1-6; examples IE1, IE2, CE1; tables 1, 2 *<br>----- | 1-10,12<br>11,13,14 | INV.<br>C08F210/16<br><br>ADD.<br>C08F4/659<br>C08L23/0807<br>F16L9/12 |
| X | WO 2023/217750 A1 (BOREALIS AG [AT]) 16 November 2023 (2023-11-16)<br>* examples CE1, CE2; tables 1, 2 *<br>----- | 1-10,12 | |
| X<br>Y | WO 03/033586 A1 (BOREALIS TECH OY [FI]; PALMLOEF MAGNUS [SE]) 24 April 2003 (2003-04-24)<br>* page 15, line 1 - page 16, line 35; claims 1, 3, 4, 9; example 4; table 1 *<br>----- | 1-11,13,14<br>11,13,14 | |

TECHNICAL FIELDS SEARCHED (IPC)

F16L
C08F
C08L

The present search report has been drawn up for all claims

2

| Place of search | Date of completion of the search | Examiner |
|---|---|---|
| Munich | 10 July 2025 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 15 5320

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2025

| Patent document cited in search report | Publication date | Patent family member(s) | Publication date |
| --- | --- | --- | --- |
| WO 2024074320 A1 | 11-04-2024 | CN 120019092 A | 16-05-2025 |
| | | KR 20250084947 A | 11-06-2025 |
| | | WO 2024074320 A1 | 11-04-2024 |
| WO 2023217750 A1 | 16-11-2023 | CN 119173546 A | 20-12-2024 |
| | | EP 4522669 A1 | 19-03-2025 |
| | | KR 20250008784 A | 15-01-2025 |
| | | WO 2023217750 A1 | 16-11-2023 |
| WO 03033586 A1 | 24-04-2003 | AT E314420 T1 | 15-01-2006 |
| | | BR 0213286 A | 26-10-2004 |
| | | CA 2461667 A1 | 24-04-2003 |
| | | CN 1556834 A | 22-12-2004 |
| | | DE 60208436 T2 | 22-06-2006 |
| | | EP 1448702 A1 | 25-08-2004 |
| | | ES 2250744 T3 | 16-04-2006 |
| | | PL 203005 B1 | 31-08-2009 |
| | | RU 2282644 C2 | 27-08-2006 |
| | | US 2004242785 A1 | 02-12-2004 |
| | | WO 03033586 A1 | 24-04-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2013323450 A1
- US 20060036041 A1
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 2016198273 A
- WO 2021009189 A
- WO 2021009190 A
- WO 2021009191 A
- WO 2021009192 A
- WO 9619503 A
- WO 9632420 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 2022268961 A
- WO 2000022040 A


### Non-patent literature cited in the description


- **SCHEIRS** ; **BOHM** ; **BOOT** ; **LEEVERS**. PE100 Resins for Pipe Applications. *TRIP*, 1996, vol. 4 (12), 408-415
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, vol. 200745, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253